# EUROPÄISCHE PATENTSCHRIFT

(11) **EP 2 556 943 B1**
(45) Veröffentlichungstag und Bekanntmachung des Hinweises auf die Patenterteilung: **13.06.2018**
(21) Anmeldenummer: 12179846.6
(22) Anmeldetag: 09.08.2012
(51) Int. Cl.: B29C 49/42, B29C 49/46, B29C 49/36, B29C 49/48

(54) **Blasmaschine, Verfahren zum Austauschen von Blasstationskomponenten sowie Getränkeabfüllanlage und/oder Getränkebehälterherstellanlage**
Blowing machine, method for exchanging blowing station components and drinks container filling assembly and/or drinks container manufacturing device
Souffleuse, procédé d'échange de composants de stations de soufflage ainsi qu'installation de remplissage de boissons et/ou installation de fabrication de récipients de boissons

(30) Priorität: 11.08.2011 DE 102011052574
(43) Veröffentlichungstag der Anmeldung: 13.02.2013
(73) Patentinhaber: Krones AG, 93073 Neutraubling (DE)
(72) Erfinder: Laumer, Roland, 93073 Neutraubling (DE)
(74) Vertreter: Bittner, Bernhard

(56) Entgegenhaltungen:
- EP-A1- 2 295 226
- EP-A1- 2 295 324
- EP-A2- 2 295 223
- DE-A1-102008 038 141
- DE-A1-102008 038 143
- US-A- 4 880 581
- US-A1- 2008 260 887

## Beschreibung

Die Erfindung betrifft eine Blasmaschine zum Umformen von Kunststoffvorformlingen zu Kunststoffbehältnissen gemäß Anspruch 1, umfassend eine Vielzahl an Blasstationen mit Blasformträgern zum Halten von Blasformen, umfassend einen Reinraum zum Anordnen bzw. Transportieren der Blasstationen unter aseptischen Bedingungen und umfassend einen Rüstzugang des Reinraums zum Rüsten der Blasformträger mit Blasstationskomponenten.

Die Erfindung betrifft auch ein Verfahren gemäß Anspruch 11 zum Austauschen von Blasstationskomponenten einer Blasstation in einem Reinraum einer Blasmaschine, bei welchem der Reinraum geöffnet wird und bei welchem die Blasstationskomponenten ausgetauscht werden.

Darüber hinaus betrifft die Erfindung sowohl eine Getränkeabfüllanlage als auch eine Getränkebehälterherstellanlage.

Gattungsgemäße Blasmaschinen, insbesondere Streckblasmaschinen, Getränkeabfüllanlagen und/oder Getränkebehälterherstellanlagen sind aus dem Stand der Technik gut bekannt. Beispielsweise zeigt die Offenlegungsschrift DE 10 2008 038 141 A1 eine Anlage zum Herstellen von Kunststoffbehältnissen mit einem Reinraum, in welchem die Kunststoffbehältnisse sowohl hergestellt als auch mit Getränken befüllt werden. Insofern umfasst die Herstellanlage eine Vorrichtung zum Umformen von Kunststoffvorformlingen zu den Kunststoffbehältnissen und eine Befüllungseinrichtung für Letztere. Die Umformvorrichtung weist eine Vielzahl an Blasstationen mit Blasformträgern zum Halten von Blasformen auf, in welchen die Kunststoffvorformlinge zu den Kunststoffbehältnissen expandiert werden. Es versteht sich, dass zum Herstellen von unterschiedlich gestalteten Kunststoffbehältnissen, beispielsweise hinsichtlich eines Volumens und/oder einer Kontur, auch unterschiedliche Blasformen an der Umformvorrichtung eingesetzt werden müssen. Ein entsprechender Austausch erfolgt hierbei an der Umformvorrichtung händisch, indem ein erster Blasformensatz mit Blasformen erster Art gegen einen weiteren Blasformensatz mit Blasformen zweiter Art ausgetauscht wird. Nach dem Austausch müssen nicht nur die neuen Blasformen innerhalb des Reinraums sterilisiert werden, um eine Kontaminierung der Kunststoffvorformlinge bzw. der Kunststoffbehältnisse mit Keimen zu vermeiden, sondern auch der zuvor geöffnete Reinraum selbst.

Um einen Austausch der Blasformen zu erleichtern, ist es bekannt, einen auszutauschenden Blasformensatz in einer mobilen Magazinvorrichtung vorzuhalten, in welcher die Blasformen vereinzelt an Aufnahmemitteln einer Trägereinrichtung aufgenommen sind. Hierbei kann eine Übergabe der einzelnen Blasformen zwischen einer Blasstation einer Umformvorrichtung und der Magazinvorrichtung händisch oder zumindest halbautomatisiert erfolgen. Einige mobile Magazinvorrichtungen können hierbei über eine Reinigungseinrichtung verfügen, mittels welcher die Blasformen beispielsweise sogleich gespült, geputzt, poliert desinfiziert und/oder sterilisiert werden können.

Hierdurch können zwar bereits sterilisierte und damit sofort einsatzbereite Blasformen bereitgestellt werden. Dennoch besteht immer noch die Gefahr, dass der Reinraum beim Öffnen kontaminiert wird und deshalb nach dem Austausch der neuen Blasformen eine Sterilisation des Reinraums und der darin befindlichen Einrichtungen, Werkzeuge usw. zwingend erfolgen muss. Dies führt jedoch zu einer erheblichen Verzögerung in der Produktion.

Es ist Aufgabe der Erfindung gattungsgemäße Anlagen, insbesondere gattungsgemäße Streckblasmaschinen, derart weiterzuentwickeln, dass die Gefahr einer Kontaminierung des Reinraums und der darin befindlichen Einrichtungen und Werkzeuge mit Keimen ausgeschlossen wird.

Diese Aufgabe wird einerseits von einer Blasmaschine zum Umformen von Kunststoffvorformlingen zu Kunststoffbehältnissen gemäß Anspruch 1 gelöst. Erfindungsgemäß ist neben dem eigentlichen Reinraum, in welchem die Behandlung, also insbesondere die Herstellung und/oder die Befüllung, der Kunststoffbehältnisse erfolgt, ein weiterer Sterilraum vorhanden, durch welchen hindurch ein Auswechseln der Blasformen an einem Rüstzugang der Blasmaschine unter sterilen bzw. aseptischen Bedingungen ermöglicht ist. Durch diesen neuen Rüstzugang wird erfindungsgemäß der eigentliche Reinraum der Blasmaschine zum Auswechseln eines Blasformensatzes gefahrenlos geöffnet werden, ohne dass dabei sowohl der Reinraum als auch sich darin befindliche Einrichtungen, wie etwa Blaswerkzeuge, durch Keime aus der Umgebung kontaminiert werden.

Die vorliegende Erfindung ist speziell in der Getränkeindustrie von Vorteil, da insbesondere dort oftmals Kunststoffgetränkeflaschen und darin einzufüllende Getränke, welche gegenüber Keimen sehr empfindlich sind, verarbeitet werden. Deshalb wird die Aufgabe der Erfindung andererseits auch von einer Getränkeabfüllanlage und/oder einer Getränkebehälterherstellanlage gelöst, welche sich durch die vorliegende Blasmaschine auszeichnet.

Es ist denkbar, dass darüber hinaus an einer Getränkeabfüllanlage bzw. an einer Getränkebehälterherstellanlage an mehreren Bereichen bzw. Behandlungsmaschinen ein Rüstzugang mit einem derartigen zusätzlichen Sterilraum vorteilhaft verwendet werden kann. Beispielsweise an einer Füllmaschine bzw. an einer Spülmaschine zum Wechseln von CIP-Kappen, in einer Verschließmaschine zum Wechseln von Verschlusskronen, in einer Reinigungs- bzw. Sterilisationsmaschine mit behälterabhängigen Düsen und im allgemeinem auch zum Wechseln von Formatteilen bei Behältertransporteinheiten.

Der Begriff "Reinraum" beschreibt hierbei einen Prozessraum in einer Verarbeitungslinie der Blasmaschine, in welchem die Kunststoffbehältnisse unter sterilen Bedingungen prozessbedingt gehandelt werden.

Der Begriff "Sterilraum" beschreibt einen Bereich der Blasmaschine, durch welchen hindurch maschinenrelevante Komponenten unter sterilen Bedingungen in den Reinraum verbracht bzw. aus diesen heraus genommen werden können. Vorzugsweise ist der Reinraum mit dem Sterilraum in Strömungsverbindung bringbar. Vorteilhaft ist eine Strömungsverbindung zwischen dem Reinraum und dem Sterilraum unterbrechbar.

Die Bezeichnung "Blasmaschine" erfasst speziell auch eine Streckblasmaschine. Die Blasstationskomponenten umfassen Blasformen, Bodenformen, Reckstangen, Reckstangenanschläge, Halteklammern, Greifklammern oder Blasdüsen. Eine bevorzugte Ausführungsvariante sieht vor, dass der Rüstzugang einerseits eine Umgebungsschleuse zum Zugriff auf den Sterilraum und andererseits eine Austauschschleuse zum Ein- bzw. Ausschleusen der Blasstationskomponenten in bzw. aus dem Reinraum umfasst. Hierdurch kann ein Zugriff auf den Sterilraum problemlos erfolgen, ohne eine Kontaminierung des Reinraums zu riskieren.

Hierbei kann der Sterilraum mit Blasstationskomponenten vorteilhaft beschickt werden, während er von dem Reinraum noch getrennt ist. Ist eine Beschickung des Sterilraums erfolgt und die Umgebungsschleuse wieder verschlossen, kann eine Sterilisation des Sterilraums und der darin angeordneten Blasstationskomponenten erfolgen. Daran anschließend kann die Austauschschleuse und damit der Reinraum gefahrenlos geöffnet werden.

Insofern wird die Aufgabe der Erfindung auch von einem Verfahren zum Austauschen von Blasstationskomponenten einer Blasstation in einem Reinraum einer Blasmaschine gemäß Anspruch 11 gelöst. Es ist vorteilhaft, wenn die Blasstationskomponenten in einem Sterilraum oder durch einen Sterilraum hindurch in einer sterilen Umgebung ausgetauscht werden, da hierdurch Rüstzeiten erheblich verkürzt werden können.

Liegen sich die Umgebungsschleuse und die Austauschschleuse unmittelbar gegenüber, kann der Rüstzugang sehr kompakt gebaut werden, da insbesondere Blasformen vis-a-vis durch den Rüstzugang hindurch geschleust werden können.

Es ist möglich, dass ein Sterilraum des Rüstzugangs sogleich von einem entsprechend konstruierten Gehäuse eines Reinraums ausgestaltet werden kann.

Weist der Rüstzugang ein den Sterilraum umhüllendes Gehäuse auf, welches an einer Reinraumwandung lösbar angeordnet ist, können vorteilhafter Weise auch herkömmliche bzw. bereits aufgebaute Blasmaschinen einfach nachgerüstet werden.

Insbesondere kann ein derart lösbarer Rüstzugang mit dem den Sterilraum umhüllenden Gehäuse auch an verschiedenen Bereichen einer Getränkebehälterbehandlungsanlage vorteilhaft umpositioniert bzw. temporär angeordnet werden, nämlich dort, wo aktuell ein entsprechender Rüstvorgang unter sterilen Bedingungen vorgenommen werden soll.

Eine besonders bevorzugte Ausführungsvariante sieht somit auch eine Austauschschleuse zum Ein- bzw. Ausschleusen der Blasstationskomponenten in bzw. aus dem Reinraum vor, wobei die Austauschschleuse eine öffenbare Trennwand des Rüstzugangs, vorzugsweise eine sterilraumseitige Trennwand und eine reinraumseitige Trennwand, umfasst.

Der Rüstzugang kann etwa für Wartungszwecke problemlos von der Reinraumwandung abgenommen werden, wenn die reinraumseitige Trennwand geschlossen ist, da eine Kontaminierung des Reinraums durch Keime ausgeschlossen werden kann. Ist dann auch die sterilraumseitige Trennwand geschlossen, kann auch die Gefahr einer sterilraumseitigen Kontaminierung ausgeschlossen werden. Insbesondere ist dies auch bei einer Verlagerung des vorliegenden Rüstzugangs vorteilhaft.

Darüber hinaus ist es vorteilhaft, wenn der Rüstzugang eine automatisch oder zumindest halbautomatisch betätigbare Einrichtung zum Übergeben der Blasstationskomponenten von dem Sterilraum in den Reinraum und/oder umgekehrt umfasst. Hierdurch kann ein Auswechseln der Blasstationskomponenten beschleunigt werden, wodurch die Rüstzeit vorteilhaft reduziert werden kann.

Vorteilhafter Weise weist die Übergabeeinrichtung einen Greifer zum Greifen und Übergeben der Blasstationskomponenten auf, mittels welchem beispielsweise jede Blasform gegriffen werden kann. Somit kann insbesondere eine auszutauschende Blasform aus einem Blasformträger einer Blasstation mittels des Greifers herausgenommen und in eine freie Aufnahme innerhalb des Rüstzugangs übergeben werden. Anschließend kann aus einer weiteren Aufnahme des Rüstzugangs eine neue Blasform genommen und an den zuvor geleerten Blasformträger übergeben werden. Dieses Prozedere kann solange fortgeführt werden, bis der komplette Blasformensatz ausgetauscht ist.

Es versteht sich, dass ein solcher Austausch auch händisch oder mittels anders gestalteter Hilfsmittel durchgeführt werden kann.

Vorteilhaft ist es zudem, wenn der Rüstzugang eine vorzugsweise rotierbare Blasstationskomponentenhalteeinrichtung umfasst, sodass ein Rüstvorgang insbesondere eines kompletten Blasformensatzes schnell und einfach vorgenommen werden kann. Es ist denkbar, dass auch anders konstruierte Halteeinrichtungen zum Einsatz kommen können.

Damit eine Koordination zwischen den einzelnen Einrichtungen, wie etwa der Austauschschleuse, der vorzugsweise rotierbaren Blasstationskomponentenhalteeinrichtung, eines reinraumseitigen Blasformenrades und der Übergabeeinrichtung automatisiert werden kann, ist es vorteilhaft, wenn hierfür eine Steuervorrichtung vorgesehen ist, mittels welcher die entsprechenden Funktionsabläufe zumindest teilweise automatisiert durchgeführt werden können.

Des Weiteren ist es vorteilhaft, wenn der Rüstzugang eine Sterilgaszufuhr umfasst, welche einen Anschluss an eine Reinraumsterilgasbereitstellung aufweist. Somit kann eine Sterilisation an dem Rüstzugang konstruktiv einfach realisiert werden.

Um die Gefahr einer Kontamination des Reinraums und des Sterilraums gleichermaßen außergewöhnlich gut zu verhindern, ist es von besonderem Vorteil, wenn ein Reinraumarbeitsluftdruck höher ist als ein Sterilraumarbeitsluftdruck der Rüstzufuhr und der Sterilraumarbeitsluftdruck höher ist als der Atmosphärenluftdruck. Hierdurch kann einerseits die Gefahr verringert werden, dass ein Luftaustausch von dem Sterilraum in den Reinraum hinein erfolgen kann. Andererseits kann ein Luftaustausch aus der Umgebung außerhalb der Streckblasmaschine in den Sterilraum hinein somit gut vermieden werden.

Insofern ist vorliegend ein Rüstzugang mit einer vorteilhaften zweistufigen Druckluftbarriere geschaffen. Allein hierdurch kann eine Blasmaschine mit einem Reinraum, insbesondere eine Streckblasmaschine, auch ohne die übrigen Merkmale der Offenbarung vorteilhaft weiterentwickelt werden.

Weitere Vorteile, Ziele und Eigenschaften vorliegender Erfindung werden anhand anliegender Zeichnung und nachfolgender Beschreibung erläutert, in welchen beispielhaft eine Getränkebehälterbehandlungsanlage mit einer wenigstens einen Rüstzugang umfassenden Streckblasmaschine dargestellt und beschrieben ist.

In der Zeichnung zeigen:
- Figur 1: schematisch eine Ansicht einer Streckblasmaschine einer Getränkebehälterbehandlungsanlage mit wenigstens einem einen Sterilraum umfassenden Rüstzugang;
- Figur 2: schematisch eine Ansicht der gesamten Getränkebehälterbehandlungsanlage aus der Figur 1; und
- Figur 3: schematisch eine Ansicht einer Lüftungsanlage der Getränkebehandlungsanlage aus den Figuren 1 und 2.

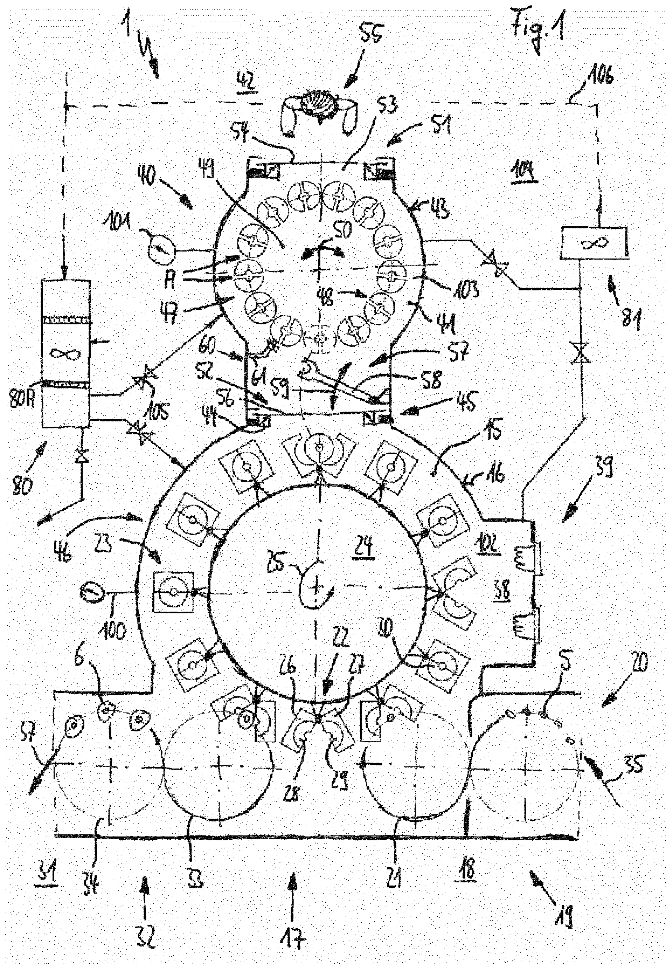

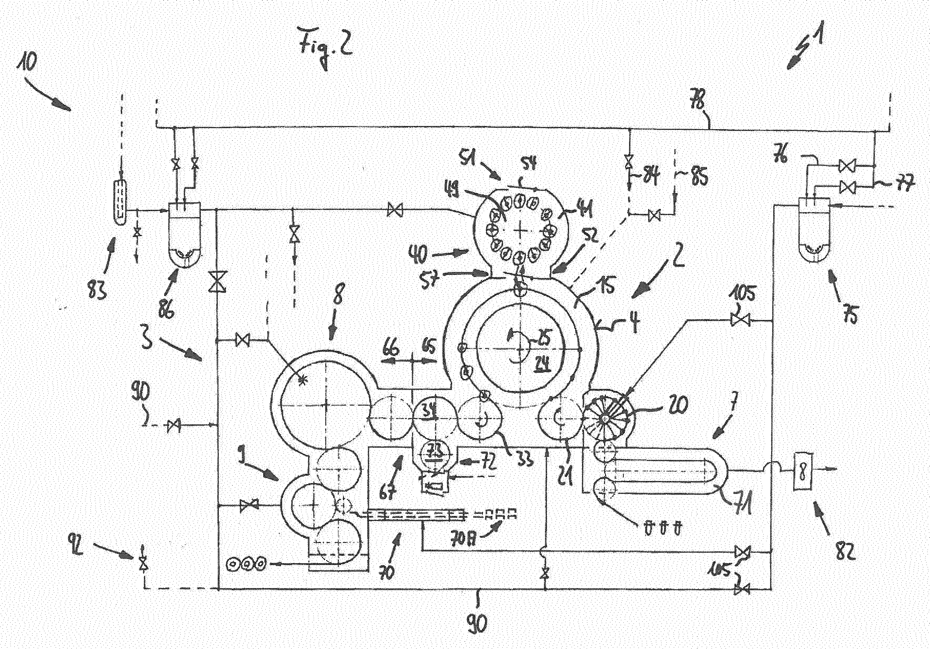

Die in den Figuren 1 bis 3 gezeigte Getränkebehälterbehandlungsanlage 1 (siehe insbesondere Figur 2) umfasst im Wesentlichen eine Getränkebehälterherstelleinheit 2 und eine Getränkeabfülleinheit 3, wobei sich die Getränkebehälterherstelleinheit 2 hauptsächlich durch eine Blasmaschine, welche in diesem Ausführungsbeispiel als Streckblasmaschine 4 zum Umformen von Kunststoffvorformlingen 5 zu Kunststoffgetränkeflaschen 6 ausgestaltet ist, sowie eine davor geschaltete Heizvorrichtung 7 und die Getränkeabfülleinheit 3 durch eine Getränkeabfüllmaschine 8 zum Befüllen der hergestellten Kunststoffgetränkeflaschen 6 und durch eine Verschließmaschine 9 zum Verschließen der befüllten Kunststoffgetränkeflaschen 6 auszeichnet.

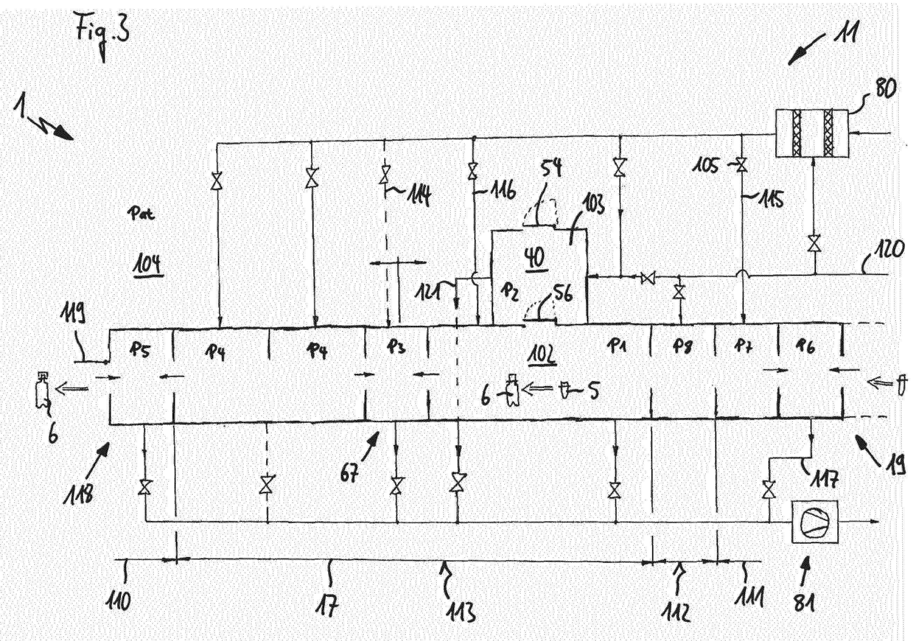

Darüber hinaus verfügt die Getränkebehälterbehandlungsanlage 1 noch über eine zentrale Sterilisationsvorrichtung 10 (siehe insbesondere Figur 2) und über eine zentrale Lüftungsvorrichtung 11 (siehe insbesondere Figur 3) zum Filtern von Rohluft und zum Versorgen der Getränkebehälterbehandlungsanlage 1 mit steriler Reinluft.

Die in der Figur 1 detailreicher gezeigte Streckblasmaschine 4 weist einen die Getränkebehälterbehandlungsanlage 1 übergreifenden Reinraum 15 auf, der mittels einer Reinraumwandung 16 einen sterilisierbaren Reinraumbereich 17 der Getränkebehälterbehandlungslinie 1 formuliert.

Die Streckblasmaschine 4 besitzt eingangsseitig 18 eine Kunststoffvorformlingzufuhr 19 mit einem Sterilisationsrad 20 für die Kunststoffvorformlinge 5 und mit einem ersten Übergaberad 21, mittels welchem die Kunststoffvorformlinge 5 einzeln nacheinander jeweils an einen Blasformträger 22 einer Blasstation 23 an einem Blasrad 24 mit einer Drehrichtung 25 übergeben werden.

Jeder der Blasformträger 22 umfasst eine erste Blasformträgerhälfte 26 und eine zweite Blasformträgerhälfte 27, an welchen eine erste Blasformhälfte 28 und eine zweite Blasformhälfte 29 einer Blasform 30 gehalten sind. Die Blasformträgerhälften 28 und 29 können somit in bekannter Weise geöffnet bzw. geschlossen werden.

Ausgangsseitig 31 verfügt die Streckblasmaschine 4 über eine Kunststoffgetränkeflaschenabfuhr 32 mit einem zweiten Übergaberad 33 und einem dritten Übergaberad 34, mittels welchen die fertig geblasenen Kunststoffgetränkeflaschen 6 zum einen aus den Blasstationen 23 entnommen und zum anderen von der Streckblasmaschine 4 abgeführt werden können.

An der Streckblasmaschine 4 werden die Kunststoffvorformlinge 5 dem Sterilisationsrad 20 in Zuführtransportrichtung 35 übergeben. Nach dem Sterilisieren der Kunststoffvorformlinge 5 und dem Bestücken der einzelnen Blasstationen 23 werden die Kunststoffvorformlinge 5 in den einzelnen Blasformen 30 mittels Prozessluft zu den Kunststoffgetränkeflaschen 6 expandiert, bevor sie abschließend in Abführtransportrichtung 37 ausgangsseitig 31 an der Streckblasmaschine 4 zur Weiterverwendung an die Getränkeabfülleinheit 3 bereitgestellt werden.

In einem Servicebereich 38 der Streckblasmaschine 4 ist an der Reinraumwandung 16 ein Serviceeingriff 39 zum händischen Eingreifen in den Reinraum 15 hinsichtlich einer Wartung oder einer Fehlerbehebung oder dergleichen vorgesehen.

Darüber hinaus ist die Streckblasmaschine 4 mit einem Rüstzugang 40 ausgestattet, über welchen die Blasstationen 23 mit unterschiedlichen Blasformen 30 ausgerüstet werden können. Erfindungsgemäß umfasst der Rüstzugang 40 einen Sterilraum 41, der dem Reinraum 15 umgebungsseitig 42 vorgelagert ist.

Der Sterilraum 41 ist hierbei von einem Gehäuse 43 umhüllt, wobei das Gehäuse 43 in diesem Ausführungsbeispiel an der Reinraumwandung 16 mittels einer Dichtungsmittel 44 umfassende Verschlusseinrichtung 45 lösbar angeschlossen ist.

Mittels des vorliegenden den Sterilraum 41 umfassenden Rüstzugangs 40 ist es vorteilhafter Weise insbesondere möglich, neben einem ersten Blasformensatz 46 bestehend aus den Blasformen 30 innerhalb des Reinraums 15 einen weiteren bereits sterilen Blasformensatz 47 bestehend aus anderen Blasformen 48 außerhalb des Reinraums 15 an der Streckblasmaschine 4 unter sterilen Bedingungen vorzuhalten, sodass ein Umstellen der Streckblasmaschine 4 auf eine andere Kunststoffgetränkeflaschenart schneller vorgenommen werden kann als bisher möglich.

Zum Vorhalten des weiteren Blasformensatzes 47 umfasst der Rüstzugang 40 eine rotierbare Blasformenhalteeinrichtung 49, welche gemäß den Bewegungsrichtungen des Pfeils 50 innerhalb des Sterilraums 41 bewegt werden kann.

Der Rüstzugang 40 weist darüber hinaus einerseits eine Umgebungsschleuse 51 zum Zugriff auf den Sterilraum 41 von umgebungsseitig 42 und andererseits eine Austauschschleuse 52 zum Ein- bzw. Ausschleusen der Blasformen 30, 48 in bzw. aus dem Reinraum 15 auf.

Die Umgebungsschleuse 51 weist eine Bestückungsöffnung 53 mit einer Umgebungsschleusentür 54 auf. Über die Bestückungsöffnung 53 kann eine Bedienperson 55 die Blasformen 30 bzw. 48 in den Sterilraum 41 einbringen bzw. ausbringen. Gegebenenfalls kann an der Bestückungsöffnung 53 ein mobiles Blasformenmagazin (hier nicht dargestellt) angebracht werden, um ein Auswechseln der Blasformen 30 bzw. 48 weiter zu erleichtern.

Die Austauschschleuse 52 weist in diesem Ausführungsbeispiel lediglich eine einzige Austauschschleusentür 56 auf, mittels welcher der Sterilraum 41 von dem Reinraum 15 hermetisch abgetrennt werden kann. Vorteilhaft sind zwei solcher Austauschschleusentüren, wenn der Rüstzugang 40 temporär von der Reinraumwandung 16 abgenommen ist, sodass sowohl der Sterilraum 41 als auch der Reinraum 15 verschlossen sind.

Darüber hinaus umfasst der Rüstzugang 40 eine hygienisch gestaltete, automatisierte Übergabeeinrichtung 57 zum Übergeben der Blasformen 30 bzw. 48 zwischen dem Sterilraum 41 und dem Reinraum 15. Die automatisierte Übergabeeinrichtung 57 weist hierzu einen Greifer 58 zum Handeln der einzelnen Blasformen 30 bzw. 48 auf. Der Greifer 58 ist gemäß den Schwenkrichtungen 59 schwenkbar in dem Rüstzugang 40 gelagert.

Bei einem Blasformenwechsel wird die Austauschschleusentür 56 geöffnet. Geöffnet wird auch derjenige Blasformträger 22 der entsprechenden Blasstation 23, welcher der Austauschschleuse 52 unmittelbar gegenüberliegt. Die bewegliche Austauschschleusentür 56 und der Blasformträger 22 werden zweckmäßig automatisiert angesteuert. Jedoch ist auch eine manuelle Bedienung vorstellbar, die beispielsweise über den Serviceeingriff 39 erfolgen kann. Die hygienisch gestaltete Übergabeeinrichtung 57 wechselt bei geöffneter Austauschschleusentür 56 die Blasformensätze 46 und 47 aus.

Allgemein können der Greifer 58 und die Austauschschleuse 52 auch dazu benutzt werden, um Gegenstände in den Reinraum 15 hinein zu bringen oder aus dem Reinraum 15 heraus zu entnehmen, wie etwa fehlerhaft geformte Kunststoffgetränkeflaschen 6.

Der Rüstzugang 40 kann identisch oder ähnlich ausgestaltet auch mehrmals insbesondere im Bereich des Blasrads 24 vorhanden sein. Je nach Anlagen- bzw. Maschinengröße und Anforderung ist die Anordnung in Lage und Position kann dies zweckmäßig gewählt werden.

Zum Sterilisieren der einzelnen Blasformen 48 innerhalb des Rüstzugangs 40 ist noch eine Sterilgaszufuhr 60 mit wenigstens einer Reinigungsdüse 61 vorgesehen. Hierbei kann jede der in dem Sterilraum 41 angeordneten Blasformen 48 temporär vor der Reinigungsdüse 61 geparkt und gereinigt werden.

Bevorzugt wird der Reinraum 15 mit einem temperierten Gasgemisch aus H₂O₂ und Luft sterilisiert. Eine Reinigung ist nicht zwingend vor jeder Sterilisation erforderlich.

Zweckmäßig wird auch der Rüstzugang 40 mit Gas sterilisiert. Dies ist notwendig, wenn etwa ein unsteriler Blasformensatz 48 von der Bedienperson 55 in den Sterilraum 41 eingebracht wird. So können die Blasformen 48 bereits während der Produktion der Kunststoffgetränkebehälter 6 gerüstet bzw. mittels einer oder mehrerer Reinigungsdüsen 61 gereinigt und sterilisiert werden. Zweckmäßig können dabei die verschiedenen Blasformen 48 auf Abstand A gebracht werden, um alle Oberflächen gut zu benetzen.

Wie insbesondere gut aus der Darstellung nach der Figur 2 zu erkennen ist, ist die Getränkebehandlungsanlage 1 in einen sterilisierbaren Bereich 65 und einen Bereich 66, der reinigbar und sterilisierbar ist, eingeteilt.

Der sterilisierbare Bereich 65 beginnt nach der Sterilisation der Kunststoffvorformlinge 5 am Sterilisationsrad 20 und endet bei einer Transfereinheit 67 zwischen der Streckblasmaschine 4 und der Getränkeabfüllmaschine 8 der Getränkeabfülleinheit 3.

Der reinigbare und sterilisierbare Bereich 66 beginnt unmittelbar nach dem sterilisierbaren Bereich 65 und endet nach einem Aufbringen von Verschlüssen auf den Kunststoffgetränkeflaschen 6 an der Verschließmaschine 9 mit einer Verschlusssterilisationseinheit 70 für Verschlüsse 70A. Vorteilhaft ist es besonders, dass die anderen Blasformen 48 im Rüstzugang 40 automatisiert gereinigt werden. Vorzugsweise wird die Getränkebehälterbehandlungsanlage 1 insgesamt trockensterilisiert.

Des Weiteren umfasst die Getränkebehälterbehandlungsanlage 1 einen zu der Heizvorrichtung 7 gehörigen Ofen 71 zur Erwärmung der Kunststoffvorformlinge 5 und eine zusätzliche Kunststoffgetränkeflaschenschleuse 72.

Während der Produktion versorgt ein an sich bekannter Verdampfer 75 das Sterilisationsrad 20 der Kunststoffvorformlinge 5 und/oder die Verschlusssterilisationseinheit 70. Um mehrere erforderliche Mengen für verschiedene Betriebszustände an H₂O₂-Luftgemisch zu erzeugen, wird der Verdampfer 75 über zwei oder mehrere Wege 76 und 77 aus einer H₂O₂-Ringleitung 78 gespeist.

Die Luftversorgung kann entweder aus der Umgebung 42 und/oder aus einem Lüftungssystem 80 mit einem Filter 80A bzw. 81 (siehe Figuren 1 und 3) der Getränkebehälterbehandlungsanlage 1 und/oder aus dem Abluftgerät 82 des Ofens 71 kommen. Absolute Sicherheit hinsichtlich der Reinheit gibt ein Kerzenfilterelement 83 in der Zuleitung der Zuluft.

Die H₂O₂-Ringleitung 78 kann weitere Abnehmer 84 haben, um weitere Einheiten der Getränkebehälterbehandlungsanlage 1 zu versorgen. Beispielsweise können hydraulische Dichtungssysteme zusammen mit einem Wasseranschluss 85 versorgt werden.

Da der Verdampfer 75 während der Produktion nicht ungünstig beeinflusst werden sollte, ist es vorteilhaft, dass der weitere Blasformensatz 47 über einen weiteren Verdampfer 86 sterilisiert werden kann, da dieser Prozess zeitweise während der Produktion geplant werden sollte.

Mittels des zweiten Verdampfers 86 kann des Weiteren über eine Leitung auch die zusätzliche Kunststoffgetränkeflaschenschleuse 72 zumindest zeitweise sterilisiert werden.

Über die zusätzliche Kunststoffgetränkeflaschenschleuse 72 können beispielsweise fehlerhafte Kunststoffgetränkeflaschen 6 oder Probebehälter (hier nicht gezeigt) aus dem laufenden Prozess über ein Transferrad 73 entnommen bzw. entsorgt werden.

Nach der Produktion wird der reinigbare und sterilisierbare Bereich 66 bevorzugt automatisch mit Lauge über ein oder mehrere Spritzdüsen und/oder Rotationsköpfen (hier nicht gezeigt) gereinigt und anschließend mit Wasser, vorzugsweise mit Trinkwasserqualität, gespült.

Anschließend sollte der reinigbare und sterilisierbare Bereich 66 noch getrocknet werden. Die Getränkebehälterbehandlungsanlage 1 kann dann in einen Ruhezustand versetzt werden.

Vor der nächsten Produktion müssen die verschiedenen Komponenten der Getränkebehälterbehandlungsanlage 1 sterilisiert werden. Dazu müssen diese erwärmt werden. Zweckmäßig wird temperierte Luft 90 in ein Rohrleitungssystem 91 eingespeist.

Anschließend wird die Getränkebehälterbehandlungsanlage 1 vorzugsweise mit H₂O₂ trockensterilisiert. Beide Verdampfer 75 und 86 können in das Rohrleitungssystem 91 einspeisen und somit den Prozess beschleunigen. Auch kann H₂O₂ vom Rohrleitungssystem 91 an einem Anschluss 92 abgezweigt werden, um beispielsweise das erste Lüftungssystem 80 und/oder ein weiteres Rohrleitungssystem, wie etwa ein Düsensystem zum Reinigen der Getränkebehälterbehandlungsanlage 1, und/oder auch anlagenfremde Einheiten zu sterilisieren.

Der Reinraum 15 und der Sterilraum 41 werden mit filtrierter Luft beaufschlagt, so dass ein Überdruck zur umgebenden Atmosphäre gewährleistet ist. Vorliegend wird der Überdruck von einer Maschinensteuerung (hier nicht gezeigt) mittels ein oder mehreren Drucksensoren 100 und 101 überwacht.

Eine besonders erfolgreiche Kunststoffgetränkeflaschenproduktion gewährleistet beispielsweise folgendes Druckverhältnis: p₁ > p₂ > p_{at,} wobei vorliegend p₁ der Reinraumarbeitsluftdruck 102, p₂ der Sterilraumarbeitsdruck 103 und pₐₜ der Atmosphärenluftdruck 104 ist. Um die Gefahr einer Kontaminierung durch Keime insbesondere im Bereich der Streckblasmaschine 4 noch weiter reduzieren zu können, ist der Reinraumarbeitsluftdruck 102 höher als der Sterilraumarbeitsluftdruck 103 der Rüstzufuhr 40 und der Sterilraumarbeitsluftdruck 103 höher als der Atmosphärenluftdruck 104 eingestellt.

Zweckmäßig wird sterile Zuluft über ein zentrales Lüftungssystem 80 bzw. 81 aufbereitet und über Rohrleitungen den verschiedenen Reinraumsektionen zugeführt. Die Steuerung der Luftströme übernehmen im Regelfall Sitz- bzw. Klappenventile 105 (nur beispielhaft beziffert).

Gegebenenfalls ist auch ein Abluftsystem hinsichtlich des zweiten Lüftungssystems 81 erforderlich, falls eine gerichtete Strömung gewünscht wird. EinTeil der Luft kann auch in einem Kreislauf 106 gefahren werden. Das Lüftungssystem kann auch andere Reinräume von Maschinen versorgen, wie der Getränkeabfüllmaschine 8, Verschließmaschine 9 oder aber auch parallel aufgestellte Anlagen (hier nicht gezeigt). Im Allgemeinen ist es zweckmäßig dass die Prozesstechnik in Kombination mit anderen Maschinen der Behälterbehandlung kombiniert wird. Das Lüftungssystem 80 kann auch von der Rückseite sterilisiert werden.

Insbesondere die Darstellung nach der Figur 3 zeigt schematisch gut die Funktionsweise der Lüftungstechnik der vorliegenden Getränkebehälterbehandlungsanlage 1, die in unsterile Bereiche 110 und 111, in einen Sterilisationsbereich 112 zur Sterilisation der Kunststoffvorformlinge 5 und in einen sterilen Bereich 113 eingeteilt ist. Der sterile Bereich 113 beginnt während der Sterilisation der Kunststoffvorformlinge 5 und endet nachdem der Verschluss auf dem jeweiligen Kunststoffgetränkebehälter 6 aufgebracht ist. Dieser gesamte Bereich muss unter Überdruck während der Produktion gehalten werden.

Außerdem gibt es noch die Bereiche 65 und 66, welche den Füllbereich der vorliegenden Streckblasmaschine 4 abgrenzen.

An der Transfereinheit 67, welche ein Schleusensystem darstellt, wird vorzugsweise abgesaugt, sodass während der Produktion keine Aerosole aus dem Füllprozess in den sterilisierbaren Bereich 65 gelangen. Zusätzlich kann an der Transfereinheit 67 eine Zuluft 114 angeschlossen sein, sodass stets ein Überdruck zur Atmosphäre gehalten werden kann. Im gesamten sterilen Bereich 113 sollte ein Überdruck von 5 Pascal nicht unterschritten werden.

Auf der Zuführseite der Kunststoffvorformlinge 5 ist ebenfalls ein Schleusensystem in Gestalt der Kunststoffvorformlingzufuhr 19 installiert. Da insbesondere an dem Sterilisationsrad 20 ein heißes H₂O₂-Luftgemisch zur Sterilisation der Kunststoffvorformlinge 5 zugeführt wird, ist es notwendig, auf beiden Seiten das gleiche Druckniveau zu haben (p₁ ≈ p₈ ≈ p₇ > pₐₜ). Dies ist einerseits durch eine zweite Zuluft 115 und andererseits durch eine dritte Zuluft 116 gewährleistet. Wobei ein Großteil des Volumenstroms der zweiten Zuluft 115 über die Abluft 117 abgesaugt wird.

Ebenfalls muss auf der Auslaufseite eine Luftschleuse 118 vorhanden sein, um eine klare Trennung zwischen dem sterilen Bereich 113 und dem ersten unsterilen Bereich 110 zu haben.

Bei der Sterilisation der Getränkebehälterbehandlungsanlage 1 wird vorzugsweise heißes H₂O₂-Luftgemisch eingesetzt, wie bereits erwähnt. Zu diesem Zweck wird der Auslauf 118 mit einer Klappe 119 zumindest teilweise verschlossen.

Hinsichtlich eines Einbringens von Gegenständen während einer Produktionsunterbrechung ist es zum Zwecke der Anlagenflexibilität sinnvoll formatabhängige Teile, wie z. B. Blasformen 30 bzw. 48 in die sterile Zone des Reinraums 15, speziell in die Streckblasmaschine 4, über ein Rüstzugang 40 einzubringen.

Zum Einbringen der Blasformen 48 muss die Umgebungsschleusentür 54 geöffnet werden, wodurch der Rüstzugang 40 unsteril ist. Nach dem Schließen der Umgebungsschleusentür 54 werden die Blasformen 48 im Sterilraum 41 des Rüstzugangs 40 vorzugsweise mit dem H₂O₂-Luftgemisch über eine H₂O₂-Luftgemisch-Versorgung 120 sterilisiert. Von der H₂O₂-Luftgemisch-Versorgung 120 ausgehend kann gegebenenfalls auch eine Kunststoffvorformlingssterilisation oder auch die Filter des Lüftungssystems 80 (siehe Figur 1) sterilisiert werden. Nach der Sterilisation der Blasformen 48 sollte der Sterilraum mit filtrierter Luft vom Lüftungssystem 80 gespült werden. Dazu ist auch eine Abluft 121 notwendig. Vor dem Öffnen der Ausgangsschleusentür 56 muss der Druck zwischen dem Reinraum 15 und dem Sterilraum 41 auf gleiches Niveau gebracht werden (p₁ ≈ p₂). Dann können die neuen Blasformen 48 in den Reinraum 15 eingebracht bzw. vorhandene Blasformen 30 aus dem Reinraum 15 sollten entnommen werden, ohne dass die Sterilität verletzt wird. Während der Produktion müssen immer folgende Druckzustände gewährleistet sein: p₁, p₃, p₄ > pₐₜ.

Es versteht sich, dass es sich bei dem vorstehend erläuterten Ausführungsbeispiel lediglich um eine erste Ausgestaltung der offenbarten Streckblasmaschine 4 handelt. Insofern beschränkt sich die Ausgestaltung der Offenbarung nicht auf dieses Ausführungsbeispiel.

### Bezugszeichenliste

- 1: Getränkebehälterbehandlungsanlage
- 2: Getränkebehälterherstelleinheit
- 3: Getränkeabfülleinheit
- 4: Streckblasmaschine
- 5: Kunststoffvorformlinge
- 6: Kunststoffgetränkeflaschen
- 7: Heizvorrichtung
- 8: Getränkeabfüllmaschine
- 9: Verschließmaschine
- 10: Sterilisationsvorrichtung
- 11: Lüftungsvorrichtung
- 15: Reinraum
- 16: Reinraumwandung
- 17: Reinraumbereich
- 18: eingangsseitig
- 19: Kunststoffvorformlingzufuhr
- 20: Sterilisationsrad
- 21: erstes Übergaberad
- 22: Blasformträger
- 23: Blasstation
- 24: Blasrad
- 25: Drehrichtung
- 26: erste Blasformträgerhälfte
- 27: zweite Blasformträgerhälfte
- 28: erste Blasformhälfte
- 29: zweite Blasformhälfte
- 30: Blasform
- 31: ausgangsseitig
- 32: Kunststoffgetränkeflaschenabfuhr
- 33: zweites Übergaberad
- 34: drittes Übergaberad
- 35: Zuführtransportrichtung
- 37: Abführtransportrichtung
- 38: Servicebereich
- 39: Serviceeingriff
- 40: Rüstzugang
- 41: Sterilraum
- 42: umgebungsseitig
- 43: Gehäuse
- 44: Dichtungsmittel
- 45: Verschlusseinrichtung
- 46: erster Blasformensatz
- 47: weiterer Blasformensatz
- 48: andere Blasformen
- 48A: erste Blasformhälfte
- 49: rotierbare Blasformenhalteeinrichtung
- 50: Pfeil
- 51: Umgebungsschleuse
- 52: Austauschschleuse
- 53: Bestückungsöffnung
- 54: Umgebungsschleusentür
- 55: Bedienperson
- 56: Austauschschleusentür
- 57: Übergabeeinrichtung
- 58: Greifer
- 59: Schwenkrichtungen
- 60: Sterilgaszufuhr
- 61: Reinigungsdüse
- 65: sterilisierbarer Bereich
- 66: reinig- und sterilisierbarer Bereich
- 67: Transfereinheit
- 70: Verschlusssterilisationseinheit
- 70A: Verschlüsse
- 71: Ofen
- 72: Kunststoffgetränkeflaschenschleuse
- 73: Transferrad
- 75: Verdampfer
- 76: erster Weg
- 77: zweiter Weg
- 78: H₂O₂-Ringleitung
- 80: erstes Lüftungssystem
- 80A: Filter
- 81: zweites Lüftungssystem
- 82: Abluftgerät
- 83: Kerzenfilterelement
- 84: weitere Abnehmer
- 85: Wasseranschluss
- 86: weiterer Verdampfer
- 90: temperierte Luft
- 91: Rohrleitungssystem
- 92: Anschluss
- 100: erster Drucksensor
- 101: zweiter Drucksensor
- 102: Reinraumarbeitsdruck
- 103: Sterilraumarbeitsdruck
- 104: Atmosphärenluftdruck
- 105: Sitz- und Klappenventile
- 106: Kreislauf
- 110: erster unsteriler Bereich
- 111: zweiter unsteriler Bereich
- 112: Sterilisationsbereich
- 113: steriler Bereich
- 114: erste Zuluft
- 115: zweite Zuluft
- 116: dritte Zuluft
- 117: Abluft
- 118: Luftschleuse
- 119: Klappe
- 120: H₂O₂-Luftgemisch-Versorgung
- 121: Abluft
- A: Abstand

## Patentansprüche

1. Blasmaschine (4) zum Umformen von Kunststoffvorformlingen (5) zu Kunststoffbehältnissen (6) umfassend eine Vielzahl an Blasstationen (23) mit Blasformträgern (22) zum Halten von Blasformen (30, 48), umfassend einen Reinraum (15) zum Anordnen bzw. Transportieren der Blasstationen (23) unter aseptischen Bedingungen und umfassend einen Rüstzugang (40) des Reinraums (15) zum Rüsten der Blasformträger (22) mit Blasstationskomponenten (30, 48), wobei die Blasstationskomponenten Blasformen (30, 48), Bodenformen, Reckstangen, Reckstangenanschläge, Halteklammern, Greifklammern oder Blasdüsen umfassen,
**dadurch gekennzeichnet, dass**
der Rüstzugang (40) wenigstens einen Sterilraum (41) umfasst, welcher dem Reinraum (15) mit der Vielzahl an Blasstationen (23) umgebungsseitig (42) vorgelagert ist, und wobei dieser Rüstzugang (40) dafür vorgesehen ist, dass der eigentliche Reinraum (40) der Blasmaschine zum Auswechseln eines Blasformensatzes gefahrenlos öffenbar ist, ohne dass dabei sowohl der Reinraum (15) als auch sich darin befindliche Einrichtungen, wie etwa Blaswerkzeuge, durch Keime aus der Umgebung kontaminiert werden können.

2. Blasmaschine (4) nach Anspruch 1,
**dadurch gekennzeichnet, dass**
der Rüstzugang (40) einerseits eine Umgebungsschleuse (51) zum Zugriff auf den Sterilraum (41) und andererseits eine Austauschschleuse (52) zum Ein- bzw. Ausschleusen der Blasstationskomponenten (30, 48) in bzw. aus dem Reinraum (15) umfasst.

3. Blasmaschine (4) nach einem der Ansprüche 1 bis 2,
**dadurch gekennzeichnet, dass**
der Rüstzugang (40) ein den Sterilraum (41) umhüllendes Gehäuse (43) aufweist, welches an einer Reinraumwandung (16) lösbar angeordnet ist.

4. Blasmaschine (4) nach einem der Ansprüche 1 bis 3,
**gekennzeichnet durch**
eine Austauschschleuse (52) zum Ein- bzw. Ausschleusen der Blasstationskomponenten (30, 48) in bzw. aus dem Reinraum (15), wobei die Austauschschleuse (52) eine öffenbare Trennwand (56) des Rüstzugangs (40), vorzugsweise eine sterilraumseitige Trennwand (56) und eine reinraumseitige Trennwand, umfasst.

5. Blasmaschine (4) nach einem der Ansprüche 1 bis 4,
**dadurch gekennzeichnet, dass**
der Rüstzugang (40) eine automatisch oder zumindest halbautomatisch betätigbare Einrichtung (57) zum Übergeben der Blasstationskomponenten (30, 48) von dem Sterilraum (41) in den Reinraum (15) und/oder umgekehrt umfasst.

6. Blasmaschine (4) nach Anspruch 5,
**dadurch gekennzeichnet, dass**
die Übergabeeinrichtung (57) einen Greifer (58) zum Greifen und Übergeben der Blasstationskomponenten (30, 48) aufweist.

7. Blasmaschine (4) nach einem der Ansprüche 1 bis 6,
**dadurch gekennzeichnet, dass**
der Rüstzugang (40) eine vorzugsweise rotierbare Blasstationskomponentenhalteeinrichtung (49) umfasst.

8. Blasmaschine (4) nach einem der Ansprüche 1 bis 7,
**dadurch gekennzeichnet, dass**
der Rüstzugang (40) eine Sterilgaszufuhr (60) umfasst, welche einen Anschluss an eine Reinraumsterilgasbereitstellung (80, 120) aufweist.

9. Blasmaschine (4) nach einem der Ansprüche 1 bis 8,
**dadurch gekennzeichnet, dass**
ein Reinraumarbeitsluftdruck (102) höher ist als ein Sterilraumarbeitsluftdruck (103) der Rüstzufuhr (40) und der Sterilraumarbeitsluftdruck (103) höher ist als der Atmosphärenluftdruck (104).

10. Getränkeabfüllanlage (3) und/oder Getränkebehälterherstellanlage (2),
**gekennzeichnet durch**
eine Blasmaschine (4) nach einem der vorhergehenden Ansprüche.

11. Verfahren zum Austauschen von Blasstationskomponenten (30, 48) einer Blasstation (23) in einem Reinraum (15) einer Blasmaschine (4) gemäß zumindest einem der vorhergehenden Ansprüche, bei welchem der Reinraum (15) geöffnet wird und bei welchem die Blasstationskomponenten (30, 48) ausgetauscht werden, wobei die Blasstationskomponenten (30, 48) unter sterilen Bedingungen ausgetauscht werden.

12. Verfahren nach Anspruch 11,
**dadurch gekennzeichnet, dass**
die Blasstationskomponenten (30, 48) in einem Sterilraum (41) oder durch einen Sterilraum (41) hindurch in einer sterilen Umgebung (15, 41) ausgetauscht werden.

## Claims

1. A blow moulding machine (4) for shaping plastics material preforms (5) into plastics material containers (6), comprising a plurality of blow moulding stations (23) with blow mould carriers (22) for holding blow moulds (30, 48), comprising a clean room (15) for arranging or conveying the blow moulding stations (23) under aseptic conditions and comprising an installation access (40) to the clean room (15) for installing the blow mould carriers (22) with blow moulding station components (30, 48), wherein the blow moulding station components embrace blow moulds (30, 48), floor moulds, stretch bars, stretch bar stops, holding clamps, gripping clamps or blow moulding nozzles,
**characterized in that**
the installation access (40) comprises at least one sterile room (41) which is positioned in front of the clean room (15) with the plurality of blow moulding stations (23) on the environment side (42), and wherein this installation access (40) is provided that the actual clean room (40) of the blow moulding machine can be opened safely to replace a set of blow moulds without germs from the environment contaminating both the clean room (15) and the equipment inside, such as blowing tools.

2. Blow moulding machine (4) according to claim 1,
**characterized in that**
the installation access (40) comprises an environment lock (51) for access to the sterile room (41) on the one hand and an exchange lock (52) for separating the blow moulding station components (30, 48) into and out of the clean room (15) on the other hand.

3. Blow moulding machine (4) according to one of the claims 1 to 2,
**characterized in that**
the installation access (40) has a housing (43) which envelops the sterile room (41) and which is arranged in a releasable manner on a wall (16) of the clean room.

4. Blow moulding machine (4) according to one of the claims 1 to 3,
**characterized by**
an exchange lock (52) for separating the blow moulding station components (30, 48) into and out of the clean room (15), wherein the exchange lock (52) comprises a separating wall (56) - capable of being opened - of the installation access (40), preferably a separating wall (56) on the side towards the sterile room and a separating wall on the side towards the clean room.

5. Blow moulding machine (4) according to one of the claims 1 to 4,
**characterized in that**
the installation access (40) comprises a device (57) capable of being actuated automatically or at least semi-automatically for transferring the blow moulding station components (30, 48) from the sterile room (41) into the clean room (15) and/or vice versa.

6. Blow moulding machine (4) according to claim 5,
**characterized in that**
the transfer device (57) has a gripper (58) for gripping and transferring the blow moulding station components (30, 48).

7. Blow moulding machine (4) according to one of the claims 1 to 6,
**characterized in that**
the installation access (40) comprises a blow moulding station component holding device (49) which is preferably capable of being rotated.

8. Blow moulding machine (4) according to one of the claims 1 to 7,
**characterized in that**
the installation access (40) comprises a sterile gas supply (60) which has a connection to a sterile gas preparation means (80, 120) for the clean room.

9. Blow moulding machine (4) according to one of the claims 1 to 8,
**characterized in that**
a clean room working air pressure (102) is higher than a sterile room working air pressure (103) of the installation supply (40) and the sterile room working air pressure (103) is higher than the atmosphere air pressure (104).

10. Beverage filling plant (3) and/or a beverage container production plant (2),
**characterized by**
a blow moulding machine (4) according to any one of the preceding claims.

11. Method of exchanging components (30, 48) of a blow moulding station (23) in a clean room (15) of a blow moulding machine (4) according to any one of the preceding claims, in which the clean room (15) is opened and in which the blow moulding station components (30, 48) are exchanged, wherein the blow moulding station components (30, 48) are exchanged under sterile conditions.

12. A method according to claim 11,
**characterized in that**
the blow moulding station components (30, 48) are exchanged in a sterile room (41) or through a sterile room (41) in a sterile environment (15,41).

## Revendications

1. Machine de soufflage (4) servant à mettre en forme des préformes en plastique (5) en des récipients en plastique (6), comprenant une pluralité de postes de soufflage (23) pourvus de supports de moule de soufflage (22) servant à maintenir des moules de soufflage (30, 48), comprenant une salle blanche (15) servant à disposer ou à transporter les postes de soufflage (23) dans des conditions aseptiques et comprenant un accès d'équipement (40) de la salle blanche (15) servant à équiper les supports de moule de soufflage (22) de composants de poste de soufflage (30, 48), dans laquelle les composants de poste de soufflage comprennent des moules de soufflage (30, 48), des moules de fond, des tiges d'étirage, des butées de tige d'étirage, des agrafes de retenue, des agrafes de préhension ou des buses de soufflage,
**caractérisée en ce que**
l'accès d'équipement (40) comprend au moins une salle stérile (41), qui est montée du côté périphérique (42) en amont de la salle blanche (15) pourvue d'une pluralité de postes de soufflage (23), et dans laquelle ledit accès d'équipement (40) est prévu pour pouvoir ouvrir sans danger la salle blanche (40) à proprement parler de la machine de soufflage afin de remplacer un jeu de moules de soufflage sans ce faisant contaminer par des germes présents dans l'environnement à la fois la salle blanche (15) et les équipements s'y trouvant, tels que des outils de soufflage.

2. Machine de soufflage (4) selon la revendication 1,
**caractérisée en ce que**
l'accès d'équipement (40) comprend d'une part un sas extérieur (51) servant à accéder à la salle stérile (41) et d'autre part un sas de remplacement (52) servant à introduire et à sortir des composants de poste de soufflage (30, 48) dans ou hors de la salle blanche (15).

3. Machine de soufflage (4) selon l'une quelconque des revendications 1 à 2,
**caractérisée en ce que**
l'accès d'équipement (40) présente un boîtier (43) enveloppant la salle stérile (41), lequel est disposé de manière amovible au niveau d'une paroi de salle blanche (16).

4. Machine de soufflage (4) selon l'une quelconque des revendications 1 à 3,
**caractérisée par**
un sas de remplacement (52) servant à introduire et à sortir les composants de poste de soufflage (30, 48) dans ou hors de la salle blanche (15), dans laquelle le sas de remplacement (52) comprend une paroi de séparation (56) pouvant être ouverte de l'accès d'équipement (40), de préférence une paroi de séparation (56) du côté de la salle stérile et une paroi de séparation du côté de la salle blanche.

5. Machine de soufflage (4) selon l'une quelconque des revendications 1 à 4,
**caractérisée en ce que**
l'accès d'équipement (40) comprend un dispositif (57) pouvant être actionné de manière automatique ou au moins de manière semi-automatique, servant à transférer les composants de poste de soufflage (30, 48) de la salle stérile (41) dans la salle blanche (15) et/ou inversement.

6. Machine de soufflage (4) selon la revendication 5,
**caractérisée en ce que**
le dispositif de transfert (57) présente un système de préhension (58) servant à saisir et à transférer les composants de poste de soufflage (30, 48).

7. Machine de soufflage (4) selon l'une quelconque des revendications 1 à 6,
**caractérisée en ce que**
l'accès d'équipement (40) comprend un dispositif de maintien de composant de poste de soufflage (49) de préférence rotatif.

8. Machine de soufflage (4) selon l'une quelconque des revendications 1 à 7,
**caractérisée en ce que**
l'accès d'équipement (40) comprend une arrivée de gaz stérile (60), qui présente un raccord à un système d'approvisionnement en gaz stérile de salle blanche (80, 120).

9. Machine de soufflage (4) selon l'une quelconque des revendications 1 à 8,
**caractérisée en ce que**
une pression d'air de travail de salle blanche (102) est plus élevée qu'une pression d'air de travail de salle stérile (103) de l'arrivée d'équipement (40) et la pression d'air de travail de salle stérile (103) est plus élevée que la pression d'air atmosphérique (104).

10. Installation de transvasement de boissons (3) et/ou installation de fabrication de contenants de boisson (2),
**caractérisées par**
une machine de soufflage (4) selon l'une quelconque des revendications précédentes.

11. Procédé servant à remplacer des composants de poste de soufflage (30, 48) d'un poste de soufflage (23) dans une salle blanche (15) d'une machine de soufflage (4) selon au moins l'une quelconque des revendications précédentes, dans lequel la salle blanche (15) est ouverte et dans lequel les composants de poste de soufflage (30, 48) sont remplacés, dans lequel les composants de poste de soufflage (30, 48) sont remplacés dans des conditions stériles.

12. Procédé selon la revendication 11,
**caractérisé en ce que**
les composants de poste de soufflage (30, 48) sont remplacés dans un environnement stérile (15, 41) dans une salle stérile (41) ou en passant par une salle stérile (41).
